# FASCICULE DE BREVET EUROPEEN

(11) **EP 1 090 245 B1**
(45) Date de publication et mention de la délivrance du brevet: **22.05.2002**
(21) Numéro de dépôt: 99926561.4
(22) Date de dépôt: 29.06.1999
(51) Int. Cl.: F16L 33/207

(54) **PROCEDE DE MONTAGE D'UN RACCORD A L'EXTREMITE D'UN TUBE ET NOUVEAU TYPE DE RACCORD PERMETTANT SA MISE EN OEUVRE**
ANORDNUNGSVERFAHREN ZUM VERBINDEN EINER ARMATUR MIT EINEM ROHRELEMENT UND EIN NEUER TYP KUPPLUNG ZUR DUERCHFÜHRUNG DES VERFAHRENS
METHOD FOR MOUNTING A FITTING ON A TUBE END AND NOVEL TYPE OF FITTING FOR IMPLEMENTING SAME

(30) Priorité: 02.07.1998 FR 9808643
(43) Date de publication de la demande: 11.04.2001
(73) Titulaire: Geci, 69780 Mions (FR)
(72) Inventeur: FAVRE, Alain, 69780 Mions (FR); Favre, Patrick, 69780 Nions (FR)
(74) Mandataire: Vuillermoz, Bruno
(86) Numéro de dépôt international: FR9901558
(87) Numéro de publication internationale: WO0001974

(56) Documents cités:
- DE-B- 1 215 453
- FR-A- 1 385 034
- US-A- 3 549 180

## Description

### Domaine Technique

Dans de nombreux secteurs industriels, on se trouve confrontés au problème d'avoir à véhiculer des fluides à l'intérieur d'installations comportant des éléments tubulaires raccordés les uns aux autres, éléments qui dans certains cas, sont constitués de tuyaux ou conduites flexibles en général à base d'élastomère (silicone notamment) renforcé ou non au moyen d'une structure textile telle qu'une tresse intégrée dans leurs paroi.

### Techniques antérieures

En général, pour réaliser le raccord, on fixe à l'intérieur du tube, à son extrémité, un embout qui est serti par une douille extérieure prenant ainsi en sandwich la paroi du tube, cet embout supportant des éléments de raccordement à des moyens complémentaires montés quant à eux à la sortie ou entrée de l'ensemble auquel le tuyau doit être raccordé.

Une telle manière de procéder, qui ressort notamment de l'US-A-3 549 180, présente cependant des inconvénients par le fait que la presence d'un embout inséré à l'intérieur du tuyau entraîne une réduction notable du passage du fluide à ce niveau, ce qui non seulement perturbe son écoulement mais peur également dans certains cas entraîner une rétention de fluide.

Il a été récemment proposé, par le Demandeur, un perfectionnement aux systèmes de raccordement du type décrit dans le DE-A-1215453 qui permet, comme cela ressort de la figure 1 annexée, d'avoir une continuité pratiquement parfaite de la paroi interne du tube avec la surface interne de l'embout de raccordement

Une telle solution, qui est basée sur les enseignements du FR-A-1 385 034, ne permet cependant pas d'assurer avec certitude un raccordement parfaitement aseptique, condition indispensable dans de nombreux secteurs techniques, tels que l'alimentation, la pharmacie..., dans lesquels il est impératif d'éliminer toutes les zones où pourraient se loger des moisissures.

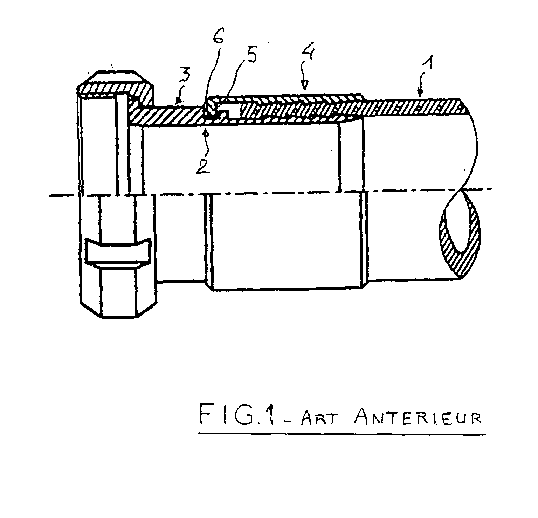

En effet, si l'on se reporte à cette figure 1, pour réaliser le raccord de l'extrémité du tube (1), on insère donc à son extrémité un embout, désigné par la référence générale (2), dont la partie extérieure (3) forme une couronne destinée à supporter les moyens de jonction avec l'élément auquel le tuyau doit être raccordé.

Cela étant fait, on sertit autour du tube ainsi muni de l'embout (2) une douille périphérique (4) emprisonnant ainsi la paroi du tube. Pour assurer un positionnement parfait, la douille (4) comporte une couronne interne (5) apte à s'encastrer dans une gorge périphérique (6) prévue sur la surface externe de l'embout (3).

Si une telle manière de procéder permet de réaliser des raccords dont le conduit interne ne comporte pas de zone de rétention de fluide, en revanche, il n'est pas possible de garantir que l'ensemble soit parfaitement aseptique compte tenu du fait que des moisissures, bactéries... peuvent éventuellement se loger au niveau de la zone de raccordement entre l'embout (3) et l'extrémité (5) de la douille (4).

### Exposé de l'invention

L'invention vise donc à résoudre non seulement le problème de rétention au niveau des embouts de jonction, mais également vise à proposer un raccord parfaitement aseptique dans lequel les risques d'infiltration par l'extérieur pouvant éventuellement entraîner une pollution résiduelle sont éliminés.

D'une manière générale, l'invention concerne un raccord adaptable aux extrémités d'un tube comprenant :
_ un embout dont la partie extérieure forme une couronne destinée à supporter les moyens de jonction avec l'élément auquel le tube doit être raccordé, ledit embout ayant une structure telle qu'il comporte une extrémité crantée destinée à être insérée à l'intérieur du tube et dont le diamètre interne correspond sensiblement au diamètre interne de ce dernier, prolongé par une surface annulaire à l'extrémité de laquelle sont prévus des moyens de raccordement proprement dits ;
_ une douille périphérique sertie autour du tube, ladite douille comportant une couronne interne apte à s'encastrer dans une gorge périphérique prévue à la surface de l'embout

Ce raccord **se caractérise** en ce que la gorge périphérique est une gorge à deux niveaux:
- le niveau inférieur étant situé du côté de l'extrémité du tube et recevant la couronne interne de la douille de blocage et ;
- le niveau supérieur recevant un joint périphérique qui se trouve bloqué entre la face extrême de la couronne et la surface interne de la douille, adjacente à cette face extrême.

En procédant d'une telle manière, on élimine donc tout risque d'infiltration au niveau de la zone de jonction douille/embout et on obtient une étanchéité parfaite de l'ensemble.

Par ailleurs, selon une forme de réalisation préférentielle, le niveau inférieur de la gorge destiné à recevoir la couronne interne de blocage, est délimité par deux parois, l'une, perpendiculaire à l'axe longitudinal du raccord à l'aplomb de l'extrémité du niveau supérieure, l'autre, en retrait, présentant une pente de quelques degrés et servant de face d'appui et de guidage à la face interne de la couronne qui présente également une pente équivalente.

### Description sommaire des dessins

L'invention et les avantages qu'elle apporte seront cependant mieux compris grâce à l'exemple de réalisation donné ci-après à titre indicatif, mais non limitatif, et qui est illustré par les figures annexées dans lesquelles:
- la figure 1 illustre l'état de la technique le plus proche ;
- les figures 2 et 3 sont des vues en demi-coupe en élévation illustrant la mise en place d'un raccord, conformément au procédé selon à l'invention, avant sertissage de la douille (figure 1) et après sertissage de celle-ci (figure 2),
- les figures 4 et 5étant quant à elles des vues agrandies des zones cerclées des figures 2 et 3, et montrent plus précisément la manière dont est assuré le blocage du joint d'étanchéité périphérique.

### Manière de réaliser l'invention

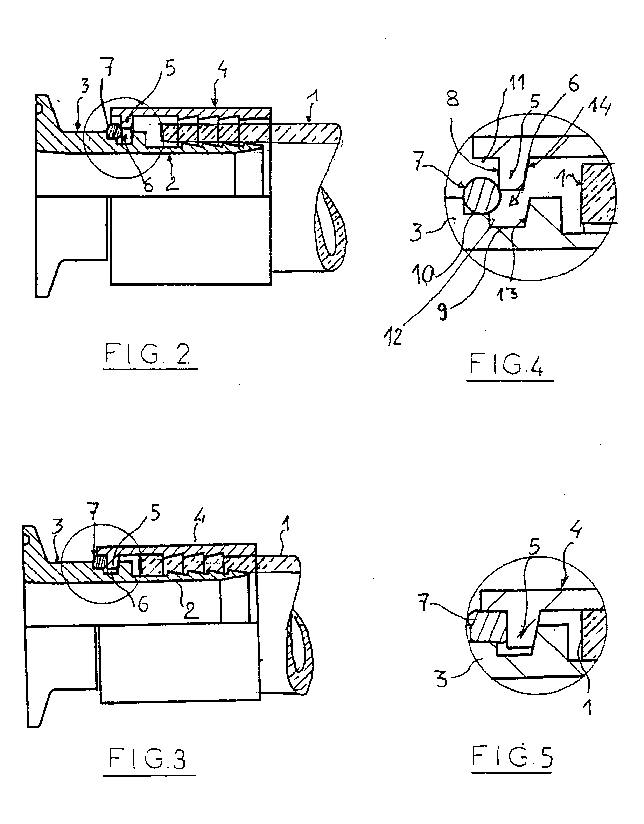

Comme indiqué précédemment, les figures 2 à 5 illustrent un mode de mise en oeuvre de l'invention.

Dans la suite de la description, les mêmes références utilisées pour décrire l'état de la technique antérieur illustré par la figure 1, seront employées pour désigner les mêmes éléments entrant dans la mise en oeuvre et procédé conforme à l'invention.

Par ailleurs, les figures 2 et 3 sont des représentations sensiblement à l'échelle ½ de réalisation d'un raccord à l'extrémité d'un tube flexible (1) ayant un diamètre interne de 50 mm.

Bien entendu, cet exemple n'est pas limitatif et l'invention peut être mise en oeuvre selon une gamme importante de tubes, dont le diamètre peut varier de quelques millimètres à plusieurs dizaines de centimètres.

En se reportant aux schémas annexés, le procédé conforme à l'invention consiste donc à insérer, à l'extrémité d'un tube (1), un embout (2), ledit embout comportant une partie extérieure en forme de couronne (3) qui supporte les moyens de jonction avec l'élément auquel le tuyau peut être raccordé, moyens non représentés aux figures 2 et 3.

L'embout étant introduit à l'intérieur du tube (1), on sertit autour de celui-ci une douille périphérique (4) qui emprisonne donc la paroi du tube.

Pour assurer une liaison parfaite entre l'embout (2). et la douille (4), cette dernière comporte une couronne interne (5), disposée en retrait par rapport à l'extrémité (11) du tube (1), apte à s'encastrer dans une gorge périphérique (6) prévue sur la surface externe de l'embout.

Par suite, après sertissage (voir figures 3 et 5), on obtient une étanchéité parfaite au niveau de la zone de jonction douille/embout, éliminant tous risques d'infiltration et assurant les qualités aseptiques parfaites au niveau du raccord.

Dans la forme de réalisation préférentielle illustrée par les figures 2 et 3, la gorge périphérique (6) de l'embout (3) est une gorge à deux niveaux (9,10).

Le niveau inférieur (9) est situé du côté de l'extrémité du tube (1), et est destiné à recevoir la couronne interne (5) de la douille de blocage (4).

Le niveau supérieur (10) est, quant à lui, destiné à recevoir le joint périphérique (7) qui, après sertissage (voir figures 3 et 5), se trouve donc bloqué par la face extrême (8) de la couronne (5) et la surface interne (11) de la douille (4) adjacente à cette face extrême (8).

Par ailleurs, ainsi que cela ressort clairement des figures 4 et 5, dans une forme de réalisation préférentielle, les parois latérales (12,13) disposées de part et d'autre du niveau inférieur (9) sont, d'une part, pour la paroi (12) qui délimite le bord latéral du niveau supérieur (10) perpendiculaire à l'axe du tube et, d'autre part, pour la paroi (13), en forme de pan incliné, de l'ordre de quelques degrés, la face latérale (14) de la couronne (5) ayant une pente complémentaire. Par suite, lors de l'opération de sertissage, les parois (14) et (13) prennent appui l'une contre l'autre, ce qui permet de comprimer latéralement le joint périphérique (10) assurant ainsi un blocage et une étanchéité parfaite.

Grâce à une telle manière de procéder, par rapport à l'état de la technique antérieure, on obtient un raccordement qui, non seulement élimine toute zone de rétention du fluide à l'intérieur du conduit, mais également et surtout, élimine tout risque d'infiltration de moisissures, bactéries....à l'intérieur du raccord.

Bien entendu, l'invention n'est pas limitée au mode de réalisation décrit.

## Revendications

1. Raccord adaptable aux extrémités d'un tube (1) comprenant:
_ un embout (2) dont la partie extérieure forme une couronne (3) destinée à supporter les moyens de jonction avec l'élément auquel le tube (1) doit être raccordé, ledit embout ayant une structure telle qu'il comporte une extrémité crantée destinée à être insérée à l'intérieur du tube (1) et dont le diamètre interne correspond sensiblement au diamètre interne de ce dernier, prolongé par une surface annulaire à l'extrémité de laquelle sont prévus des moyens de raccordement proprement dits ;
_ une douille périphérique (4) sertie autour du tube (1), ladite douille (4) comportant une couronne interne (5) apte à s'encastrer dans une gorge périphérique (6) prévue à la surface de l'embout (3),
**caractérisé en ce que** la gorge périphérique (6) est une gorge à deux niveaux (9,10) :
• le niveau inférieur (9) étant situé du côté de l'extrémité du tube (1) et recevant la couronne interne (5) de la douille de blocage (4) et ;
• le niveau supérieur (10) recevant un joint périphérique (7) qui se trouve bloqué entre la face extrême (8) de la couronne (5) et la surface interne (11) de la douille (4) adjacente à cette face extême (8).

2. Raccord selon la revendication 1, **caractérisé en ce que** le niveau inférieur (9) de la gorge (6) destiné à recevoir la couronne interne (3) de blocage, est délimité par deux parois (12,13), l'une (12), perpendiculaire à l'axe longitudinal du raccord à l'aplomb de l'extrémité du niveau supérieur (10), l'autre (13), en retrait, présentant une pente de quelques degrés et servant de face d'appui et de guidage à la face interne (14) de la couronne (5) qui présente également une pente équivalente.

## Claims

1. Coupling that can be fitted to the ends of a tube (1) comprising:
- an end piece (2) the outer part of which forms a ring (3) intended to support the means of joining to the element to which the tube (1) is to be coupled, the said end piece having a structure such that it comprises an arched end intended to be inserted inside the tube (1) and the inside diameter of which corresponds roughly to the inside diameter thereof, extended by an annular surface at the end of which actual coupling means are provided;
- a peripheral sleeve (4) crimped around the tube (1), the said sleeve (4) comprising an inner ring (5) capable of fitting into a peripheral groove (6) provided on the surface of the end piece (3),
**characterized in that** the peripheral groove (6) is a groove with two levels (9, 10):
• the lower level (9) being on the same side as the end of the tube (1) and accommodating the inner ring (5) of the locking sleeve (4); and
• the upper level (10) accommodating a peripheral seal (7) which is immobilized between the end face (8) of the ring (5) and the internal surface (11) of the sleeve (4) adjacent to this end face (8).

2. Coupling according to Claim 1, **characterized in that** the lower level (9) of the groove (6) intended to accommodate the inner locking ring (3) is delimited by two walls (12, 13), one of them (12) perpendicular to the longitudinal axis of the coupling in line with the end of the upper level (10) and the other (13) set back, having a slope of a few degrees and acting as a bearing and guiding face for the internal face (14) of the ring (5) which also has an equivalent slope.

## Patentansprüche

1. An die Enden eines Schlauches (1) anpaßbares Verbindungselement mit:
- einem Ansatzstück (2), dessen äußerer Teil einen Flansch (3) bildet, der dazu vorgesehen ist, die Mittel zur Verbindung mit dem Element, an welchem der Schlauch (1) befestigt werden muß, zu tragen, wobei das genannte Ansatzstück eine derartige Struktur aufweist, daß es ein geripptes Ende aufweist, welches dazu vorgesehen ist, in das Innere des Schlauches (1) eingesteckt zu werden und dessen innerer Durchmesser im wesentlichen mit dem inneren Durchmesser des letzteren übereinstimmt, was durch eine Ringfläche verlängert wird, an deren Ende die Verbindungsmittel selbst angeordnet sind;
- einer Umfangshülse (4), welche um den Schlauch (1) gequetscht ist, wobei die Hülse (4) einen inneren Bund (5) aufweist, der dazu geeignet ist, in eine Umfangsnut (6) auf der Oberfläche des Ansatzstücks (3) eingefügt zu werden,
**dadurch gekennzeichnet, daß** die Umfangsnut (6) zwei Stufen (9,10) aufweist, nämlich:
• eine untere Stufe (9), welche auf der Seite des Schlauchendes (1) angeordnet ist und den inneren Bund (5) der Sperrhülse (4) aufnimmt, und
• eine obere Stufe (10), welche eine Umfangsdichtung (7) aufnimmt, die zwischen der Endfläche (8) des Bundes (5) und der inneren Oberfläche (11) der Hülse (4) nahe dieser Endfläche (8) eingeklemmt ist.

2. Verbindungselement nach Anspruch 1, **dadurch gekennzeichnet, daß** die untere Stufe (9) der Nut (6), die dazu vorgesehen ist, den inneren Sperrbund (3) aufzunehmen, durch zwei Wände (12,13) begrenzt ist, von denen eine (12) rechtwinklig zur Längsachse der Verbindung und lotrecht zum Ende der oberen Stufe (10) verläuft und die andere (13) zurückgesetzt und mit einer Neigung von einigen Graden verläuft und als Stütz- und Führungsfläche der Innenfläche (14) des Bundes (5) dient, welche ebenfalls eine entsprechende Neigung aufweist.
